(19) Europäisches Patentamt
European Patent Office
Office européen des brevets

(11) EP 1 489 607 A2

(12) # EUROPEAN PATENT APPLICATION

(43) Date of publication:
**22.12.2004 Bulletin 2004/52**

(51) Int Cl.[7]: **G11B 7/12**

(21) Application number: **04012929.8**

(22) Date of filing: **01.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.06.2003 KR 2003038683**

(71) Applicant: **Samsung Electronics Co., Ltd.
Suwon-si, Gyeonggi-do (KR)**

(72) Inventor: **Woong-lin, Hwang
Gunpo-si, Gyeonggi-do (KR)**

(74) Representative: **Grünecker, Kinkeldey, Stockmair & Schwanhäusser Anwaltssozietät
Maximilianstrasse 58
80538 München (DE)**

(54) **Slim optical pickup**

(57) Provided is a slim optical pickup. The slim optical pickup includes a light source (11) that emits light onto an optical disc and an optical bench (15) on which the light source is mounted. The optical bench includes a plane (12) tilted at a predetermined angle in an optical path in front of the light source and a monitor photodetector (13) that is disposed along the plane and receives the light emitted by the light source in order to monitor the amount of light. The slim optical pickup is advantageous in improving light reception efficiency and achieving a slimmer design.

FIG. 2

D
16a
11
12
12a
13
22
21
15
18
19
17b
17a
14
14c
16
14a
14b
10

EP 1 489 607 A2

## Description

### BACKGROUND OF THE INVENTION

1. Field of the Invention

The present invention relates to a slim optical pickup, and more particularly, to an optical pickup having ultra-slim dimensions and high light-reception efficiency.

2. Description of the Related Art

As demands for portable optical disc recording and reproducing apparatuses, PDAs, cellular phones, digital cameras, and camcorders increase, slim optical pickups are being actively developed. A slim optical pickup for mobile applications must have a small volume and be able to record and reproduce high density information such as music moving images.

FIG. 1 is a schematic perspective view of a conventional slim optical pickup disclosed in U .S. Patent No. 4,906,839. Referring to FIG. 1, the optical pickup includes a bench 1, a silicon substrate 3 located on the bench 1, a surface light emitting laser 2 mounted on the silicon substrate 3, a monitor photodetector 4 that receives a laser beam emitted by the surface emitting laser 2 and converts the laser beam into an electrical signal, and three photodetectors 6-8, each being comprised of four quadrants, which receives light reflected from an optical disc (not shown). Reference numerals 6a and 7a denote polarizers. Light emitted by the surface emitting laser 2 is split into a first cone-shaped beam 9 reflected toward the optical disc by a mirror placed in an optical path in front of the surface emitting laser 2 and a second cone-shaped beam 5 emitted onto the monitor photodetector 4.

Since the second beam 5 that travels toward the monitor photodetector 4 is obtained by splitting the light emitted by the surface emitting laser 2, the amount of the first beam 9 is decreased, thereby degrading focusing or tracking performance or tilt error detection capability of the optical pickup. Another drawback of the conventional optical pickup is that optical loss is high due to two-sided emission, thereby making low voltage driving difficult.

### SUMMARY OF THE INVENTION

The present invention provides a ultra-slim optical pickup designed to improve light-reception efficiency by adjusting the position of a monitor photodetector.

According to an aspect of the present invention, there is provided a slim optical pickup including a light source that emits light onto an optical disc and an optical bench on which the light source is mounted. The optical bench includes a mirror titled at a predetermined angle in an optical path in front of the light source and a monitor photodetector that is disposed on the mirror and receives the light emitted by the light source in order to monitor the amount of light.

The light source may be a blue laser diode that emits light only toward the monitor photodetector. The mirror is inclined at an angle of 45° with respect to an optical axis.

The surface of the mirror is coated with a partially reflective layer having reflectivity of 80 to 99%. The partially reflective layer may be made of a multilayer containing one or more dielectric layers.

A central portion of the optical axis of the mirror is coated with a totally reflective layer, and a peripheral portion is coated with a non-reflective layer. The totally reflective layer is formed from a metal layer containing Au, Al or Ag, and the non-reflective layer that is an entrance surface of the monitor photodetector has a circular shape and is coated with one or more dielectric films.

The optical bench includes an optical disc photodetector that receives light reflected by the optical disc and converts the light into electrical signals in order to reproduce information recorded on the optical disc.

The optical bench is mounted on a prism including a polarizing beam splitter that allows light reflected by the mirror toward the optical disc to propagate toward the optical disc and causes light reflected by the optical disc to propagate toward the optical disc photodetector. An objective lens is located above the prism to focus light onto the optical disc. A holographic optical element and a $\lambda/4$ wave plate are disposed in an optical path between the prism and the objective lens. The holographic optical element causes astigmatism in light of predetermined polarization, i.e., such that light of a predetermined polarization is to be focused on more than one focal point, and the $\lambda/4$ wave plate delays the phase of incident light of one of vertical and horizontal polarizations by $\lambda/4$.

The optical bench includes a spring disposed opposite the prism, and a heat sink is attached onto the spring.

### BRIEF DESCRIPTION OF THE DRAWINGS

The above and other features and advantages of the present invention will become more apparent by describing in detail exemplary embodiments thereof with reference to the attached drawings in which:

FIG. 1 is a perspective view of an optical pickup disclosed in U. S. Patent No. 4,906,839;
FIG. 2 is a schematic cross-sectional view of a slim optical pickup according to a first embodiment of the present invention; and
FIG. 3 is a schematic cross-sectional view of a slim optical pickup according to a second embodiment of the present invention.

DETAILED DESCRIPTION OF THE INVENTION

Slim optical pickups according to embodiments of the present invention will now be described more fully with reference to the accompanying drawings.

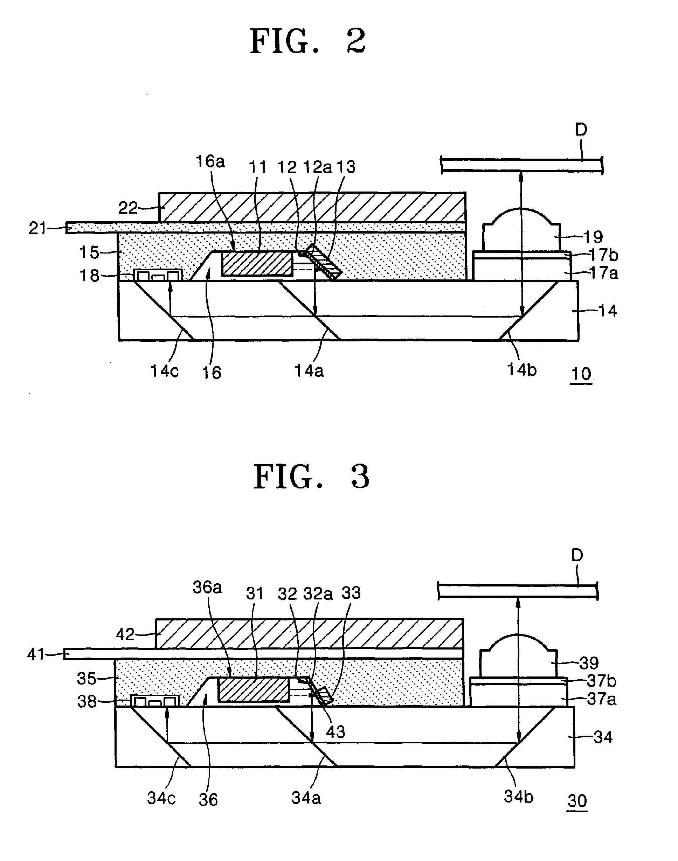

Referring to FIG. 2, a slim optical pickup 10 according to a first embodiment of the present invention includes an optical bench 15, a prism 14 mounted on the rear surface of the optical bench 15, and an objective lens 19 located on the prism 14. The optical bench 15 typically formed from silicon has a cavity 16, and a light source 11 is flip-chip bonded to a bottom of the cavity 16. The left and right sides of the cavity 16 may be sloped at an angle of 45° with respect to a Si(111) surface obtained by wet etching a Si(100) wafer tilted at an angle of 9.74°.

Preferably, the optical pickup 10 may adopt an edge-emitting laser diode capable of emitting a laser beam in only one direction as the light source 11. Conditions required to produce laser oscillation in the edge-emitting laser diode are given by Equation (1):

$$<g_{th}>=<\alpha_i>+<1/L)\ln(1/r_1r_2) \quad \ldots (1)$$

where $g_{th}$ is a threshold modal gain, $<\alpha i>$ is an internal loss, L is a resonance length, and $r_1$, and $r_2$ are reflectivities on both sections of a laser diode, respectively. Typically, reflectivity $r_1$ on a section that emits a laser beam is lower than reflectivity $r_2$ on the opposite section. To drive the laser diode with low voltage, the laser diode must have a low threshold voltage, which is possible by decreasing the threshold modal gain $g_{th}$. In particular, low voltage driving is required for a blue laser diode used in a high density handheld optical recording and reproducing apparatus since the laser diode has a low optical gain inside an active layer, which decreases significantly due to an increase in temperature, and a high optical loss caused by heat due to ohmic resistance at high driving voltage level.

Thus, for the blue laser diode to obtain high output light, it will be advantageous to lower the threshold modal gain $g_{th}$ by increasing the reflectivities $r_1$,and $r_2$ shown in Equation (1). When reflectivity $r_1$ of one section of the blue laser diode is 1 and the laser light emitted by the section of the blue laser diode is totally reflected by the opposite section, it is possible to emit the laser light in a specific direction and record or reproduce optical information by allowing some of the laser light (less than approximately 5%) emitted along the specific direction to propagate toward a monitor photodetector with the remainder (more than 95%) directed toward an optical disc. These emission conditions result in a significant increase in the amount of the light being directed toward the optical disc over the conventional laser diode featuring two-sided emissions, thereby increasing servo error control performance.

The optical pickup 10 includes a laser diode having the above advantages, that is, the laser diode that emits light in only one direction, as the light source 10, and positions a monitor photodetector 13 in an optical path in front of the light source 11. Thus, it is possible to increase the amount of light traveling toward an optical disc D and monitor the amount of light using only some of the light, thereby efficiently realizing a slim optical pickup while improving both monitoring and servo control performances.

Turning to FIG. 2, a mirror 12 tilted at 45° is placed in the optical path in front of the light source 11 in such a way as to reflect some of light. The tilted mirror 12 is coated with a partially reflective layer 12a that reflects some of incident light and transmits the remainder thereof, on which the monitor photodetector 13 is disposed. The monitor photodetector 13 receives the transmitted light and converts the same into electrical signals. Here, the partially reflective layer 12a having reflectivity of 80 to 99% is made of a multilayer containing one or more dielectric layers. Here, the reflectivity of the partially reflective layer 12a can be adjusted to a desired value.

The monitor photodetector 13 directly receives the light emitted by the light source 11, thereby significantly increasing light-reception efficiency. The monitor photodetector 11 does not require a separate space since it is disposed along a side of the cavity 16 in which the light source 11 is located. Since the optical bench 15 can be directly attached to the prism 14 due to the advantage offered by the position of the monitor photodetector 13, the present invention eliminates the need for a separate spacer, thus making the optical pickup 10 slimmer, as opposed to the conventional technology. Here, the amount of the light received by the monitor photodetector 13 of the optical pickup 10 can be adjusted by changing the reflectivity of the partially reflective layer 12a along a sloped side of the cavity 16.

The light emitted by the light source 11 and reflected by the partially reflective layer 12a travels toward the prism 14. The prism 14 includes a polarizing beam splitter 14a, which reflects light emitted from the light source 11 and polarized in a direction and transmits light polarized orthogonal to the direction, and a second reflecting surface 14b that changes an optical path of the light reflected by the polarizing beam splitter 14a to an optical path perpendicular thereto such that the light is directed onto the objective lens 19.

A holographic optical element 17a and a λ/4 wave plate 17b, also known as a quarter wave plate (QWT), are disposed in an optical path between the objective lens 19 and the polarizing beam splitter 14a. The λ/4 wave plate 17b delays the phase of incident light of one of vertical and horizontal polarizations by λ/4 and delays the phase of light of one polarization that is reflected by the optical disc D and passes through the objective lens 19 by additional λ/4, thus delaying the phase of light of one polarization by λ/2. That is, the polarization direction of the light passing through the λ/4 wave plate 17b twice is rotated by 90° relative to light of the other polarization.

The holographic optical element 17a causes light incident on and reflected from the optical disc D to be focused on more than one focal point, thereby allowing an optical disc photodetector 18 to detect a focusing error. The light passing through the holographic optical element 17a is reflected from the reflecting surface 14b, transmitted through the polarizing beam splitter 14a, reflected from a third reflecting surface 14c and incident on the optical disc photodetector 18.

The optical disc photodetector 18 including multiple light receiving sections performs a servo control by detecting a focusing, tracking or tilt error from the optical disc D and records information on or reproduces information from the optical disc D.

A spring 21 is attached to the underlying bench 15, and a heat sink 22 is mounted on the spring 21. Since the heat sink 22 located above the optical bench 15 is directly exposed to air current caused by the rotation of the optical disc D, it can quickly release heat generated by the light source 11, thus maximizing air-cooling efficiency.

FIG. 3 is a schematic cross-sectional view of an optical pickup 30 according to a second embodiment of the present invention.

Referring to FIG. 3, the optical pickup 30 includes a light source 31, a monitor photodetector 33, an optical bench 35 having an optical disc photodetector 38, a prism 34 that is attached to the optical bench 35 and has a polarizing beam splitter 34a that causes light to propagate toward an objective lens 39 or the optical disc photodetector 38, and a holographic optical element 37a, a λ /4 wave plate 37b, and the objective lens 39, all of which are disposed on the prism 34. Positions and functions of all optical components except the monitor photodetector 33 are the same as described with reference to the optical pickup 10 according to the first embodiment of the present invention. That is, the position where the monitor photodetector 33 is located is different from that in the optical pickup 10 of the first embodiment of the present invention.

The monitor photodetector 33 is disposed on a tilted mirror 32 in a front optical path of light emitted by the light source 11. Preferably, the mirror 32 is inclined at an angle of 45° in such a way that it reflects most of light toward the polarizing beam splitter 34a and transmits the remainder into the monitor photodetector 33.

While a totally reflective layer 32a is formed at a central portion of an optical axis of the tilted mirror 32 to reflect all of incident light, a non-reflective layer 43 is formed at a peripheral region of the optical axis to transmit all light. The monitor photodetector 33 is located at the region where the non-reflective layer 43 has been formed and uses the non-reflective layer 43 as its entrance surface to measure the amount of light by absorbing the maximum amount of a low intensity light beam present at the peripheral portion.

The totally reflective layer 32a may be formed from a metal layer such as Au, Al, or Ag whereas the non-reflective layer 43 may be made of one or more dielectric layers.

The light emitted by the light source 31 generally has a Gaussian light intensity distribution in which light intensity is high within a predetermined angular range with respect to the optical axis and light intensity decays away from the angular range, i.e., at the peripheral portion. Thus, in the optical pickup 30, the tilted mirror 32 reflects light emitted by the central portion of the optical axis toward the objective lens 39 while the non-reflective layer 43 transmits low intensity light emitted by the peripheral portion to the maximum extent possible in order to monitor the amount of light.

While the monitor photordetector 33 has been disposed at a lower portion of the tilted mirror 32 in FIG. 3, it may be located anywhere except for the central portion of the optical axis and formed in any pattern including a circular shape.

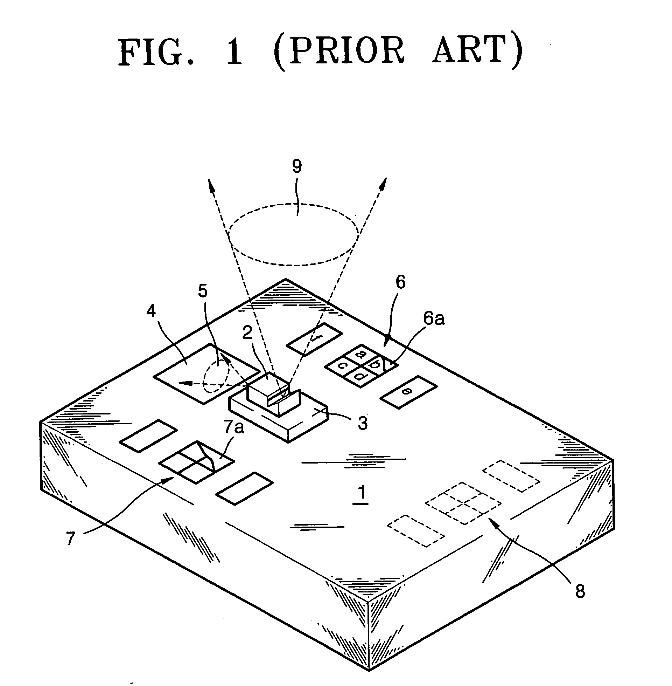

The light emitted by the light source 31 is reflected by the totally reflective layer 32a onto the prism 34, and the light reflected by the polarizing beam splitter 34a and a second reflecting surface 34b is incident on the holographic optical element 37a and propagates along the optical path as shown in FIG. 1.

In a slim optical pickup according to the present invention, a monitor photodetector can be located in a space where a light source is formed by flip-chip bonding and directly receive light emitted by the light source. Accordingly, the optical pickup has improved light reception efficiency, and since a separate spacer is not needed, it can be realized in an ultra-slim design.

While the present invention has been particularly shown and described with reference to exemplary embodiments thereof, the embodiments should be considered in descriptive sense only and not for purposes of limitation. Thus, it will be understood by those of ordinary skill in the art that various changes in form and details may be made therein without departing from the spirit and scope of the present invention as defined by the following claims.

## Claims

**1.** A slim optical pickup (10, 30) comprising:

a light source (11, 31) that emits light onto an optical disc (D); and

an optical bench (15, 35) on which the light source (10, 30) is mounted,

wherein the optical bench (15, 35) includes a mirror (12, 32) tilted at a predetermined angle in an optical path in front of the light source (11, 31) and a monitor photodetector (13, 33) that is disposed on the mirror (12, 32) and receives the light emitted by the light source (11, 31) in order to monitor the amount of light.

**2.** The optical pickup (10, 30) of claim 1, wherein the light source (11, 31) emits the light only toward the monitor photodetector (13, 33).

**3.** The optical pickup (10, 30) of claim 2, wherein the light source (11, 31) is a blue laser diode.

**4.** The optical pickup (10, 30) of claim 1, 2 or 3, wherein the mirror (12, 32) is inclined at an angle of 45° with respect to an optical axis.

**5.** The optical pickup (10) of any one of claims 1 to 4, wherein the surface of the mirror (12) is coated with a partially reflective layer (12a).

**6.** The optical pickup (10) of claim 5, wherein the partially reflective layer (12a) has reflectivity of 80 to 99%.

**7.** The optical pickup (10, 30) of claim 5 or 6, wherein the partially reflective layer (12a, 32a is a multilayer containing one or more dielectric layers.

**8.** The optical pickup (30) of any one of the claims 1 to 4, wherein a central portion of the optical axis of the mirror (12, 32) is coated with a totally reflective layer (32a), and a peripheral portion is coated with a non-reflective layer (43).

**9.** The optical pickup (30) of claim 8, wherein the totally reflective layer is formed from a metal layer containing Au, Al or Ag.

**10.** The optical pickup (30) of claim 8 or 9, wherein the non-reflective layer is formed in a circular shape.

**11.** The optical pickup (10, 30) of any one of the claims 8, 9 or 10, wherein the non-reflective layer is coated with one or more dielectric films.

**12.** The optical pickup (10, 30) of any one of the claims 1 to 11, wherein the optical bench (15, 35) includes an optical disc photodetector (18, 38) that receives light reflected by the optical disc (D) and converts the light into electrical signals in order to reproduce information recorded on the optical disc (D).

**13.** The optical pickup (10, 30) of claim 12, wherein the optical bench (15, 35) is mounted on a prism (14, 34) including a polarizing beam splitter (14a, 34a) that allows light reflected by the mirror (12, 32) toward the optical disc (D) to propagate toward the optical disc (D) and causes light reflected by the optical disc (D) to propagate toward the optical disc photodetector (18, 38).

**14.** The optical pickup (10, 30) of claim 13, wherein an objective lens (19, 39) is located above the prism (14, 34) to focus light onto the optical disc.

**15.** The optical pickup (10, 30) of claim 14, further comprising a holographic optical element (17a, 37a) and a λ/4 wave plate (17b, 37b) in an optical path between the prism (14, 34) and the objective lens (19, 39), wherein the holographic optical element (17a, 37a) causes light of a predetermined polarization to be focused on more than one focal point, and the λ/4 wave plate (17b, 37b) delays the phase of incident light of one of vertical and horizontal polarizations by λ/4.

**16.** The optical pickup (10, 30) of any one of the claims 1 to 15, wherein the optical bench (15, 35) includes a spring (21, 41) disposed opposite the prism (14, 34).

**17.** The optical pickup (10, 30) of claim 16, wherein a heat sink (22, 42) is attached onto the spring (21, 41).

FIG. 1 (PRIOR ART)

9
6
6a
5
4
2
f
a
c
b
d
e
3
7a
1
7
8

FIG. 2

D
16a
11
12
12a
13
22
21
15
18
19
17b
17a
14
14c
16
14a
14b
10

FIG. 3

D
36a
31
32
32a
33
42
41
35
38
39
37b
37a
43
34
34c
36
34a
34b
30